# EUROPEAN PATENT SPECIFICATION

(11) **EP 4 562 268 B1**
(45) Date of publication and mention of the grant of the patent: **05.08.2026**
(21) Application number: 23748046.2
(22) Date of filing: 25.07.2023
(51) Int. Cl.: E21B 33/035, E21B 34/04

(54) **SUBSEA VALVE ACTUATION SYSTEM**
UNTERWASSERVENTILBETÄTIGUNGSSYSTEM
SYSTÈME D'ACTIONNEMENT DE VANNE SOUS-MARINE

(30) Priority: 26.07.2022 NO 20220825
(43) Date of publication of application: 04.06.2025
(73) Proprietor: TechnipFMC Norge AS, 3601 Kongsberg (NO)
(72) Inventor: ELLIS, Kyle, 3601 Kongsberg (NO); WITTRY, Nathan, 3601 Kongsberg (NO)
(74) Representative: Murgitroyd & Company
(86) International application number: PCT/EP2023/070521
(87) International publication number: WO 2024/023056

(56) References cited:
- US-A1- 2012 241 159
- US-A1- 2016 245 425
- US-A1- 2020 347 690

## Description

### Technical Field

The present disclosure relates to a subsea valve actuation system. More particularly, the present disclosure relates to a subsea valve actuation system connectable to a subsea structure with a valve, preferably used in the oil and gas industry.

### Background

A subsea valve actuation system is used for operating a valve on a subsea Xmas tree. An electric retrievable actuator with rotary output is used to connect to the subsea actuation system to operate the valve. The actuator has a front part that connects to a non-retrievable rotation to linear mechanism (RLM) that is fixed to the valve. The RLM is located within a receptacle known as a torque bucket. The torque bucket provides a torque interface of the actuator towards the RLM. A standard anti-rotation connection is formed between the actuator and the RLM to absorb reaction torque. The anti-rotation connection includes through slots in the cylindrical wall of the bucket which cooperate with complementary fins on an outer cylindrical surface of the front part of the actuator. However, these slots and fins interfere with circumferential grooves in the inner cylindrical surface of the bucket for locking the bucket to the actuator. Furthermore, the slots compromise the structural integrity of the bucket.

US 2016/0245425 A1 discloses an actuator for a valve and provides background useful for understanding the invention.

It is an object of the present invention to alleviate or mitigate the above disadvantages. It is desirable that any solution is simple, not expensive to produce, and is reliable. It is further a technical problem to avoid cumbersome arrangements that are expensive to manufacture or assemble.

### Summary of the Invention

It is an object of the present invention to provide a subsea valve actuation system, an actuator assembly for a subsea valve, a subsea valve and a subsea valve assembly. This object can be achieved by the features as defined by the independent claims. Further enhancements are characterized by the dependent claims. The invention is defined by the claims.

According to a first aspect of the invention, there is provided subsea valve actuation system comprising;
a contact portion for connecting an actuator to a receptacle,
a receptacle for connecting an actuator to a subsea valve, the receptacle comprising:
   a receptacle housing having proximal and distal ends and an internal chamber, wherein the proximal end is connectable to a body of the valve; and
   each of the contact portion and the receptacle having a longitudinal axis;
   the contact portion having a first axially facing mating end face; and
   the receptacle housing having a second axially facing mating end face;
   wherein
   one of the first or second mating end faces has protrusions; and
   the other of the first or second mating end faces defines corresponding recesses for receiving the protrusions; and
   wherein the respective protrusions and recesses in the first and second mating end faces are configured to provide an anti-rotation interface to absorb the reaction torque during valve actuation.

Preferably, the protrusions extend radially on said mating end face and axially away from said mating end face; and the recesses preferably extend radially on said mating end face and axially away from said mating end face.

Preferably, the second mating end face has said protrusions extending radially on the second mating end face and axially away from the second mating end face; and
the first mating end face defines said correspondingly shaped recesses for receiving the protrusions, the recesses extending radially on said first mating end face and axially away from said mating end face into the material of the contact portion.

Optionally, each of the first or second mating end faces has said protrusions; and defines said corresponding recesses for receiving the protrusions.

Preferably, one or more of the recesses have a pair of open radial ends.

Preferably, one or more of the protrusions is confined within the boundaries of the respective mating end face if viewed in the axial direction.

Preferably, the proximal end of the receptacle housing is connectable to a body of the valve such that a drive element of the valve is at least partly located in the internal chamber; and the distal end is adapted to receive at least part of a drive mechanism of the actuator such that the drive mechanism and the drive element engage within the internal chamber.

Preferably, the receptacle housing has an inner circumferential surface defining circumferential grooves and said part of the drive mechanism of the actuator has corresponding circumferential ribs for engaging the circumferential grooves, so as to interlock the receptacle housing and the drive mechanism, wherein the circumferential grooves and the circumferential ribs are spaced apart from the protrusions and the corresponding recesses in said first and second mating end faces when the subsea valve actuation system is assembled.

The subsea valve actuation system preferably further comprises a subsea valve wherein the receptacle is provided on the subsea valve.

The subsea valve actuation system preferably further comprises an actuator for the subsea valve, wherein the contact portion is provided on the actuator.

Preferably, the actuator comprises:
an actuator housing having proximal and distal ends;
an electric motor located within the actuator housing;
a drive mechanism adapted to be driven by the electric motor and engageable with the subsea valve; and
wherein the contact portion is provided at the proximal end of the actuator housing.

Preferably, the contact portion is provided at the proximal end of the actuator housing.

Preferably, the proximal end of the receptacle housing is connectable to a body of the valve such that a drive element of the valve is at least partly located in the internal chamber; and the distal end is adapted to receive at least part of a drive mechanism of the actuator such that the drive mechanism and drive element engage within the internal chamber.

Preferably, there is provided a subsea valve comprising an actuator assembly as described above.

Preferably, there is provided a subsea valve assembly comprising at least one subsea valve as described above.

The respective protrusions and recesses in the first and second mating end faces provide an anti-rotation interface to absorb the reaction torque during valve actuation.

The provision of the respective protrusions and recesses in the first and second mating end faces permits the anti-rotation interface to be spaced apart from and not interfere with the interlocking circumferential grooves on the inner circumferential surface of the receptacle housing and circumferential ribs on the drive mechanism of the actuator. However, these slots and fins interfere with circumferential grooves in the inner cylindrical surface of the receptacle housing for locking the receptacle housing to the actuator. Furthermore, the structural integrity of the receptacle housing is not compromised and the retained structural strength can be relied upon during interlocking of the receptacle housing and the actuator and during general operation of the mechanism, in particular, during the transfer of torque from the drive mechanism of the actuator towards the drive element within the receptacle housing.

It will be appreciated that the terms "axial", "radial" and their derivatives are used in relation to the longitudinal axes of the contact portion and the receptacle with "axial" meaning "generally along or in the same direction as the longitudinal axis" and "radial" meaning "generally transverse to or in the direction across the longitudinal axis". The terms "distal and proximal" are used with reference to the subsea valve when the assembly is in use and connected to the valve. For example, the proximal end of the receptacle housing is more proximate the valve than the distal end of the receptacle housing in use when the proximal end is connected to the the subsea valve.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed embodiment may be technically combined with any other claimed embodiment or embodiments.

### Brief Description of the Drawings

The accompanying drawings illustrate presently exemplary embodiments of the invention and serve to explain, by way of example, the principles of the invention.

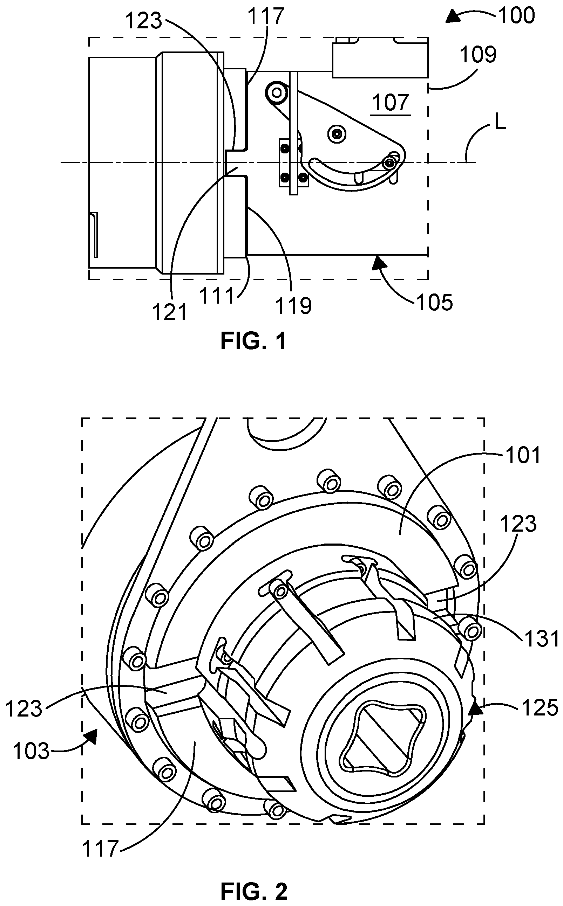

Fig 1 a schematic illustration of an actuation system according to an exemplary embodiment of the disclosure;
Fig 2 is a schematic illustration of an actuator part of the actuation system of Figure 1;

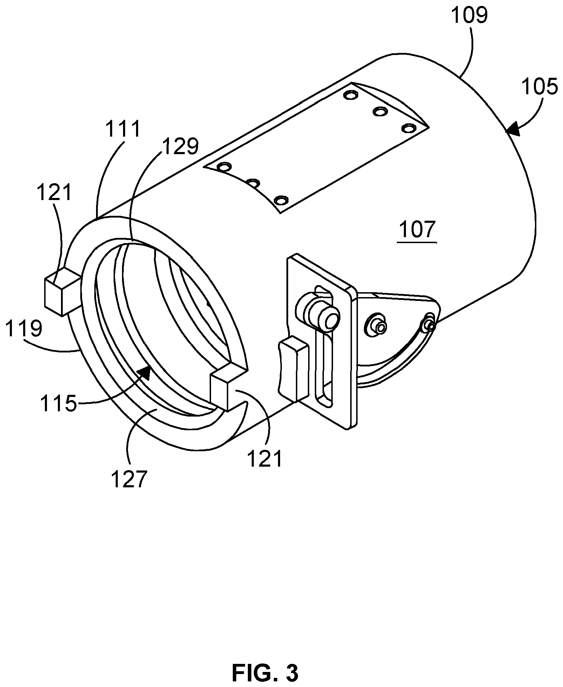

Fig 3 a schematic illustration of a receptacle of the actuation system of Figure 1;
Fig 4 a schematic illustration of a longitudinal cross-section of an assembled actuation system according to another exemplary embodiment of the disclosure; and
Fig 5 a schematic illustration of a transverse cross-section of the actuation system of Figure 4.

### Detailed Description

In the drawings, a subsea valve actuation system in accordance with the invention is indicated generally using reference numerals 100, 200. Like features have been indicated using the like reference numerals for brevity.

The subsea valve actuation system 100, 200 comprises a contact portion 101, 201 for connecting an actuator (only front portions 103, 203 of the actuator are shown in the drawings) to a receptacle 105, 205 for connecting the actuator to a subsea valve (not shown).

The receptacle 105, 205 comprises a receptacle housing 107, 207 having a proximal end 109, 209 and a distal end 111, 211 and an internal chamber 115, 215, wherein the proximal end 109, 209 is connectable to a body of the valve. Each of the contact portion 101, 201 and the receptacle 105, 205 have a longitudinal axis L. The contact portion 101, 201 has a first axially facing mating end face 117, 217 and the receptacle housing 107, 207 has a second axially facing mating end face 119, 219.

In the presently described embodiments, the second mating end face 119, 219 has protrusions 121, 221 and the first mating end face 117, 217 defines corresponding recesses 123, 223 for receiving the protrusions 121, 221. In other embodiments not shown in the drawings, the first mating end face 117, 217 can have protrusions 121, 221 and the second mating end face 119, 219 can define corresponding recesses 123, 223 for receiving the protrusions 121, 221.

The protrusions 121, 221 extend radially on the second mating end face 119, 219 and axially away from the second mating end face 119, 219; and the recesses 123, 223 extend radially on the first mating end face 117, 217 and axially away from the first mating end face 117, 217 into the material of the contact portion.

In other embodiments not shown in the drawings, each of the first mating end faces 117, 217 and second mating end faces 119, 219 has the protrusions 121, 221 and defines the corresponding recesses 123, 223 for receiving the protrusions 121, 221.

The protrusions 121, 221 and recesses 123, 223 provide an anti-rotation interface to absorb the reaction torque during valve actuation.

The recesses 123 have a pair of open radial ends (not indicated by a reference numeral).

The protrusions 121, 221 are confined within the boundaries of the second mating end face 119, 219 if viewed in the axial direction.

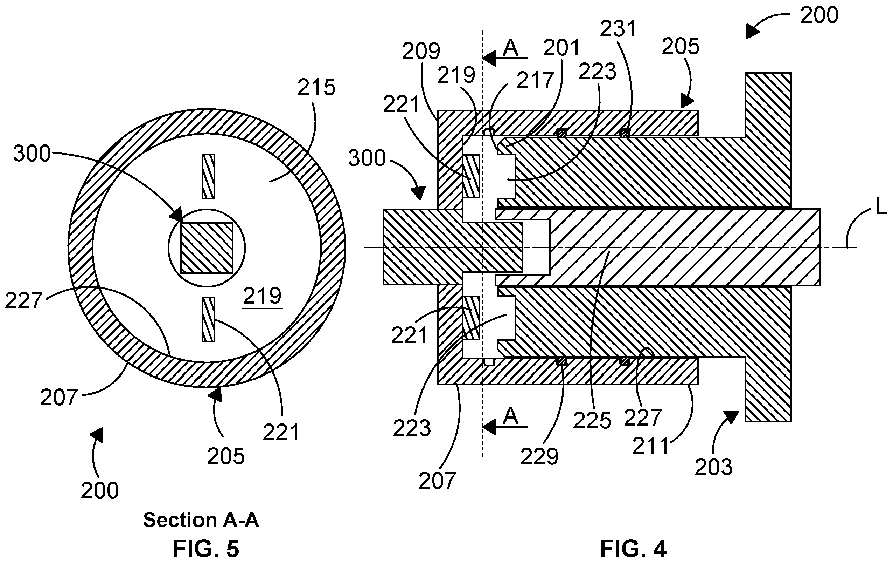

The proximal end 109, 209 of the receptacle housing 107, 207 is connectable to a body of the valve (not shown) such that a drive element (indicated 300 in Figures 4 and 5) of the valve is at least partly located in the internal chamber 115, 215; and the distal end 111, 211 is adapted to receive at least part of a drive mechanism 125, 225 of the actuator such that the drive mechanism 125, 225 and the drive element 300 engage within the internal chamber 115, 215.

The receptacle housing 107, 207 has an inner circumferential surface 127, 227 defining circumferential grooves 129, 229 and the part of the drive mechanism 125, 225 of the actuator received within the internal chamber 115, 215 has corresponding circumferential ribs 131, 231 for engaging the circumferential grooves 129, 229, so as to interlock the receptacle housing 107, 207 and the drive mechanism 125, 225 to prevent axial displacement. The circumferential grooves 129, 229 and the circumferential ribs 131, 231 are spaced apart from the protrusions 121, 221 and the corresponding recesses 123, 223 when the subsea valve actuation system 100, 200 is assembled.

Although not shown in the drawings, the actuator typically comprises an actuator housing having proximal and distal ends and an electric motor located within the actuator housing. The drive mechanism 125, 225 is adapted to be driven by the electric motor and engageable with the subsea valve via the drive element 300. The contact portion 101, 201 is provided at the proximal end of the actuator housing.

This written description uses examples to disclose the invention, including the best mode, and also to enable any person skilled in the art to practice the invention, including making and using the adapters and performing the methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A subsea valve actuation system (100, 200) comprising;
a contact portion (101, 201) for connecting an actuator to a receptacle (105, 205),
the receptacle (105, 205) for connecting the actuator to a subsea valve, the receptacle (105, 205) comprising:
a receptacle housing (107, 207) having proximal (109, 209) and distal (111, 211) ends and an internal chamber (115, 215), wherein the proximal end (109, 209) is connectable to a body of the valve; and
each of the contact portion (101, 201) and the receptacle (105, 205) having a longitudinal axis (L);
the contact portion (101, 201) having a first axially facing mating end face (117, 217); and
the receptacle housing (107, 207) having a second axially facing mating end face (119, 219);
**characterised in that**
one of the first (117, 217) or second (119, 219) mating end faces has protrusions (121, 221); and
the other of the first (117, 217) or second (119, 219) mating end faces defines corresponding recesses (123, 223) for receiving the protrusions (121, 221); and
wherein the respective protrusions (121, 221) and recesses (123, 223) in the first (117, 217) and second (119, 219) mating end faces are configured to provide an anti-rotation interface to absorb the reaction torque during valve actuation.

2. A subsea valve actuation system (100, 200) as claimed in claim 1, wherein the protrusions (121, 221) extend radially on said mating end face (117, 217, 119, 219) and axially away from said mating end face (117, 217, 119, 219); and the recesses (123, 223) extend radially on said mating end face (117, 217, 119, 219) and axially away from said mating end face (117, 217, 119, 219).

3. A subsea valve actuation system (100, 200) as claimed in claim 1 or claim 2, wherein the second mating end face (119, 219) has said protrusions (121, 221) extending radially on the second mating end face (119, 219) and axially away from the second mating end face (119, 219); and
the first mating end face (117, 217) defines said correspondingly shaped recesses (123, 223) for receiving the protrusions (121, 221), the recesses (123, 223) extending radially on said first mating end face (117, 217) and axially away from said mating end face (117, 217) into the material of the contact portion (101, 201).

4. A subsea valve actuation system (100, 200) as claimed in any preceding claim, wherein each of the first or second mating end faces (117, 217, 119, 219) has said protrusions (121, 221); and defines said corresponding recesses (123, 223) for receiving the protrusions (121, 221).

5. A subsea valve actuation system (100, 200) as claimed in any preceding claim, wherein one or more of the recesses (123, 223) have a pair of open radial ends.

6. A subsea valve actuation system (100, 200) as claimed in any preceding claim, wherein one or more of the protrusions (121, 221) is confined within the boundaries of the respective mating end face (117, 217, 119, 219) if viewed in the axial direction.

7. A subsea valve actuation system (100, 200) as claimed in any preceding claim, wherein the proximal end (109, 209) of the receptacle housing (107, 207) is connectable to a body of the valve such that a drive element of the valve is at least partly located in the internal chamber (115, 215); and the distal end (111, 211) is adapted to receive at least part of a drive mechanism (125, 225) of the actuator such that the drive mechanism (125, 225) and the drive element engage within the internal chamber (115, 215).

8. A subsea valve actuation system (100, 200) as claimed in claim 7, wherein the receptacle housing (107, 207) has an inner circumferential surface (127, 227) defining circumferential grooves (129, 229) and the part of the drive mechanism (125, 225) of the actuator has corresponding circumferential ribs (131, 231) for engaging the circumferential grooves (129, 229), so as to interlock the receptacle housing (107, 207) and the drive mechanism (125, 225), wherein the circumferential grooves (129, 229) and the circumferential ribs (131, 231) are spaced apart from the protrusions (121, 221) and the corresponding recesses (123, 223) in said first (117, 217) and second (119, 219) mating end faces when the subsea valve actuation system (100, 200) is assembled.

9. A subsea valve actuation system (100, 200) as claimed in any preceding claim, further comprising a subsea valve wherein the receptacle (105, 205) is provided on the subsea valve.

10. A subsea valve actuation system (100, 200) as claimed in claim 9, further comprising an actuator for the subsea valve, wherein the contact portion (101, 201) is provided on the actuator.

11. A subsea valve actuation system (100, 200) as claimed in claim 10, wherein the actuator comprises:
an actuator housing having proximal and distal ends;
an electric motor located within the actuator housing;
a drive mechanism (125, 225) adapted to be driven by the electric motor and engageable with the subsea valve; and
wherein the contact portion (101, 201) is provided at the proximal end of the actuator housing.

12. A subsea valve actuation system (100, 200) as claimed in claim 11, wherein the contact portion (101, 201) is provided at the proximal end of the actuator housing.

13. A subsea valve actuation system (100, 200)as claimed in claim 12, wherein the proximal end (109, 209) of the receptacle housing (107, 207) is connectable to a body of the valve such that a drive element of the valve is at least partly located in the internal chamber (115, 215); and the distal end (111, 211) is adapted to receive at least part of a drive mechanism (125, 225) of the actuator such that the drive mechanism (125, 225) and the drive element engage within the internal chamber (115, 215).

14. A subsea valve assembly comprising at least one subsea valve actuation system in accordance with claim 1.

## Patentansprüche

1. Ein Unterwasser-Ventilbetätigungssystem (100, 200), das Folgendes beinhaltet:
einen Kontaktabschnitt (101, 201) zum Verbinden eines Aktors mit einer Aufnahme (105, 205),
wobei die Aufnahme (105, 205) zum Verbinden des Aktors mit einem Unterwasserventil dient, wobei die Aufnahme (105, 205) Folgendes beinhaltet:
ein Aufnahmegehäuse (107, 207) mit proximalen (109, 209) und distalen (111, 211) Enden und einer Innenkammer (115, 215), wobei das proximale Ende (109, 209) mit einem Ventilkörper verbunden werden kann; und
wobei der Kontaktabschnitt (101, 201) und die Aufnahme (105, 205) jeweils eine Längsachse (L) aufweisen;
wobei der Kontaktabschnitt (101, 201) eine erste axial ausgerichtete Passendfläche (117, 217) aufweist; und
wobei das Aufnahmegehäuse (107, 207) eine zweite axial ausgerichtete Passendfläche (119, 219) aufweist;
**dadurch gekennzeichnet, dass**
eine von der ersten (117, 217) oder zweiten (119, 219) Passendfläche Vorsprünge (121, 221) aufweist; und
die andere von der ersten (117, 217) oder zweiten (119, 219) Passendfläche entsprechende Aussparungen (123, 223) zum Aufnehmen der Vorsprünge (121, 221) definiert; und
wobei die jeweiligen Vorsprünge (121, 221) und Aussparungen (123, 223) in der ersten (117, 217) und zweiten (119, 219) Passendfläche konfiguriert sind, um eine Verdrehschutzschnittstelle bereitzustellen, um das Reaktionsdrehmoment während der Ventilbetätigung zu absorbieren.

2. Unterwasser-Ventilbetätigungssystem (100, 200) gemäß Anspruch 1, wobei sich die Vorsprünge (121, 221) radial auf der Passendfläche (117, 217, 119, 219) und axial von der Passendfläche (117, 217, 119, 219) weg erstrecken; und sich die Aussparungen (123, 223) radial auf der Passendfläche (117, 217, 119, 219) und axial von der Passendfläche (117, 217, 119, 219) weg erstrecken.

3. Unterwasser-Ventilbetätigungssystem (100, 200) gemäß Anspruch 1 oder Anspruch 2, wobei die zweite Passendfläche (119, 219) die Vorsprünge (121, 221) aufweist, die sich radial auf der zweiten Passendfläche (119, 219) und axial von der zweiten Passendfläche (119, 219) weg erstrecken; und
die erste Passendfläche (117, 217) die entsprechend geformten Aussparungen (123, 223) zum Aufnehmen der Vorsprünge (121, 221) definiert, wobei sich die Aussparungen (123, 223) radial auf der ersten Passendfläche (117, 217) und axial von der Passendfläche (117, 217) weg in das Material des Kontaktabschnitts (101, 201) erstrecken.

4. Unterwasser-Ventilbetätigungssystem (100, 200) gemäß einem der vorhergehenden Ansprüche, wobei jede der ersten oder zweiten Passendflächen (117, 217, 119, 219) die Vorsprünge (121, 221) aufweist; und die entsprechenden Aussparungen (123, 223) zum Aufnehmen der Vorsprünge (121, 221) definiert.

5. Unterwasser-Ventilbetätigungssystem (100, 200) gemäß einem der vorhergehenden Ansprüche, wobei eine oder mehrere der Aussparungen (123, 223) ein Paar offener radialer Enden aufweisen.

6. Unterwasser-Ventilbetätigungssystem (100, 200) gemäß einem der vorhergehenden Ansprüche, wobei einer oder mehrere der Vorsprünge (121, 221), wenn in der axialen Richtung betrachtet, innerhalb der Begrenzungen der jeweiligen Passendfläche (117, 217, 119, 219) liegen.

7. Unterwasser-Ventilbetätigungssystem (100, 200) gemäß einem der vorhergehenden Ansprüche, wobei das proximale Ende (109, 209) des Aufnahmegehäuses (107, 207) mit einem Ventilkörper verbunden werden kann, sodass sich ein Antriebselement des Ventils mindestens teilweise in der Innenkammer (115, 215) befindet; und das distale Ende (111, 211) angepasst ist, um mindestens einen Teil eines Antriebsmechanismus (125, 225) des Aktors aufzunehmen, sodass der Antriebsmechanismus (125, 225) und das Antriebselement innerhalb der Innenkammer (115, 215) in Eingriff stehen.

8. Unterwasser-Ventilbetätigungssystem (100, 200) gemäß Anspruch 7, wobei das Aufnahmegehäuse (107, 207) eine Innenumfangsfläche (127, 227) aufweist, die Umfangsnuten (129, 229) definiert, und der Teil des Antriebsmechanismus (125, 225) des Aktors entsprechende Umfangsrippen (131, 231) zum Eingreifen in die Umfangsnuten (129, 229) aufweist, um das Aufnahmegehäuse (107, 207) und den Antriebsmechanismus (125, 225) wechselseitig zu verriegeln, wobei die Umfangsnuten (129, 229) und die Umfangsrippen (131, 231) von den Vorsprüngen (121, 221) und den entsprechenden Aussparungen (123, 223) in der ersten (117, 217) und zweiten (119, 219) Passendfläche beabstandet sind, wenn das Unterwasser-Ventilbetätigungssystem (100, 200) zusammengebaut ist.

9. Unterwasser-Ventilbetätigungssystem (100, 200) gemäß einem der vorhergehenden Ansprüche, das ferner ein Unterwasserventil beinhaltet, wobei die Aufnahme (105, 205) auf dem Unterwasserventil vorgesehen ist.

10. Unterwasser-Ventilbetätigungssystem (100, 200) gemäß Anspruch 9, das ferner einen Aktor für das Unterwasserventil beinhaltet, wobei der Kontaktabschnitt (101, 201) an dem Aktor vorgesehen ist.

11. Unterwasser-Ventilbetätigungssystem (100, 200) gemäß Anspruch 10, wobei der Aktor Folgendes beinhaltet:
ein Aktorgehäuse mit einem proximalen und einem distalen Ende;
einen in dem Aktorgehäuse angeordneten Elektromotor;
einen Antriebsmechanismus (125, 225), der angepasst ist, um durch den Elektromotor angetrieben zu werden, und mit dem Unterwasserventil in Eingriff gebracht zu werden; und
wobei der Kontaktabschnitt (101, 201) an dem proximalen Ende des Aktorgehäuses vorgesehen ist.

12. Unterwasser-Ventilbetätigungssystem (100, 200) gemäß Anspruch 11, wobei der Kontaktabschnitt (101, 201) an dem proximalen Ende des Aktorgehäuses vorgesehen ist.

13. Unterwasser-Ventilbetätigungssystem (100, 200) gemäß Anspruch 12, wobei das proximale Ende (109, 209) des Aufnahmegehäuses (107, 207) mit einem Ventilkörper verbunden werden kann, sodass sich ein Antriebselement des Ventils mindestens teilweise in der Innenkammer (115, 215) befindet; und das distale Ende (111, 211) angepasst ist, um mindestens einen Teil eines Antriebsmechanismus (125, 225) des Aktors aufzunehmen, sodass der Antriebsmechanismus (125, 225) und das Antriebselement innerhalb der Innenkammer (115, 215) in Eingriff stehen.

14. Eine Unterwasser-Ventilanordnung, die mindestens ein Unterwasser-Ventilbetätigungssystem gemäß Anspruch 1 beinhaltet.

## Revendications

1. Un système d'actionnement de soupape sous-marine (100, 200) comprenant :
une portion de contact (101, 201) pour raccorder un actionneur à un réceptacle (105, 205),
le réceptacle (105, 205) pour raccorder l'actionneur à une soupape sous-marine, le réceptacle (105, 205) comprenant :
un logement de réceptacle (107, 207) qui a des extrémités proximale (109, 209) et distale (111, 211) et une chambre interne (115, 215), dans lequel l'extrémité proximale (109, 209) peut être raccordée à un corps de la soupape ; et
la portion de contact (101, 201) et le réceptacle (105, 205) ayant chacun un axe longitudinal (L) ;
la portion de contact (101, 201) ayant une première face d'extrémité d'accouplement orientée axialement (117, 217) ; et
le logement de réceptacle (107, 207) ayant une deuxième face d'extrémité d'accouplement orientée axialement (119, 219) ;
**caractérisé en ce que**
l'une des première (117, 217) ou deuxième (119, 219) faces d'extrémité d'accouplement a des saillies (121, 221) ; et
l'autre des première (117, 217) ou deuxième (119, 219) faces d'extrémité d'accouplement définit des évidements (123, 223) correspondants pour recevoir les saillies (121, 221) ; et
dans lequel les saillies (121, 221) et évidements (123, 223) respectifs dans les première (117, 217) et deuxième (119, 219) faces d'extrémité d'accouplement sont configurés pour fournir une interface anti-rotation pour absorber le couple de réaction pendant l'actionnement de soupape.

2. Un système d'actionnement de soupape sous-marine (100, 200) tel que revendiqué dans la revendication 1, dans lequel les saillies (121, 221) s'étendent radialement sur ladite face d'extrémité d'accouplement (117, 217, 119, 219) et axialement en s'éloignant de ladite face d'extrémité d'accouplement (117, 217, 119, 219) ; et les évidements (123, 223) s'étendent radialement sur ladite face d'extrémité d'accouplement (117, 217, 119, 219) et axialement en s'éloignant de ladite face d'extrémité d'accouplement (117, 217, 119, 219).

3. Un système d'actionnement de soupape sous-marine (100, 200) tel que revendiqué dans la revendication 1 ou la revendication 2, dans lequel la deuxième face d'extrémité d'accouplement (119, 219) a lesdites saillies (121, 221) qui s'étendent radialement sur la deuxième face d'extrémité d'accouplement (119, 219) et axialement en s'éloignant de la deuxième face d'extrémité d'accouplement (119, 219) ; et
la première face d'extrémité d'accouplement (117, 217) définit lesdits évidements (123, 223) de forme correspondante pour recevoir les saillies (121, 221), les évidements (123, 223) s'étendant radialement sur ladite première face d'extrémité d'accouplement (117, 217) et axialement en s'éloignant de ladite face d'extrémité d'accouplement (117, 217) dans le matériau de la portion de contact (101, 201).

4. Un système d'actionnement de soupape sous-marine (100, 200) tel que revendiqué dans n'importe quelle revendication précédente, dans lequel chacune des première ou deuxième faces d'extrémité d'accouplement (117, 217, 119, 219) a lesdites saillies (121, 221) ; et définit lesdits évidements (123, 223) correspondants pour recevoir les saillies (121, 221).

5. Un système d'actionnement de soupape sous-marine (100, 200) tel que revendiqué dans n'importe quelle revendication précédente, dans lequel un ou plusieurs des évidements (123, 223) ont une paire d'extrémités radiales ouvertes.

6. Un système d'actionnement de soupape sous-marine (100, 200) tel que revendiqué dans n'importe quelle revendication précédente, dans lequel une ou plusieurs des saillies (121, 221) sont confinées à l'intérieur des limites de la face d'extrémité d'accouplement (117, 217, 119, 219) respective si on les observe dans la direction axiale.

7. Un système d'actionnement de soupape sous-marine (100, 200) tel que revendiqué dans n'importe quelle revendication précédente, dans lequel l'extrémité proximale (109, 209) du logement de réceptacle (107, 207) peut être raccordée à un corps de la soupape de telle sorte qu'un élément d'entraînement de la soupape est au moins en partie situé dans la chambre interne (115, 215) ; et l'extrémité distale (111, 211) est conçue pour recevoir au moins une partie d'un mécanisme d'entraînement (125, 225) de l'actionneur de telle sorte que le mécanisme d'entraînement (125, 225) et l'élément d'entraînement se mettent en prise à l'intérieur de la chambre interne (115, 215).

8. Un système d'actionnement de soupape sous-marine (100, 200) tel que revendiqué dans la revendication 7, dans lequel le logement de réceptacle (107, 207) a une surface circonférentielle interne (127, 227) définissant des rainures circonférentielles (129, 229) et la partie du mécanisme d'entraînement (125, 225) de l'actionneur a des nervures circonférentielles (131, 231) correspondantes pour se mettre en prise avec les rainures circonférentielles (129, 229), de manière à verrouiller réciproquement le logement de réceptacle (107, 207) et le mécanisme d'entraînement (125, 225), dans lequel les rainures circonférentielles (129, 229) et les nervures circonférentielles (131, 231) sont espacées des saillies (121, 221) et des évidements (123, 223) correspondants dans lesdites première (117, 217) et deuxième (119, 219) faces d'extrémité d'accouplement lorsque le système d'actionnement de soupape sous-marine (100, 200) est assemblé.

9. Un système d'actionnement de soupape sous-marine (100, 200) tel que revendiqué dans n'importe quelle revendication précédente, comprenant en outre une soupape sous-marine dans lequel le réceptacle (105, 205) est prévu sur la soupape sous-marine.

10. Un système d'actionnement de soupape sous-marine (100, 200) tel que revendiqué dans la revendication 9, comprenant en outre un actionneur pour la soupape sous-marine, dans lequel la portion de contact (101, 201) est prévue sur l'actionneur.

11. Un système d'actionnement de soupape sous-marine (100, 200) tel que revendiqué dans la revendication 10, dans lequel l'actionneur comprend :
un logement d'actionneur qui a des extrémités proximale et distale ;
un moteur électrique situé à l'intérieur du logement d'actionneur ;
un mécanisme d'entraînement (125, 225) conçu pour être entraîné par le moteur électrique et pouvoir se mettre en prise avec la soupape sous-marine ; et
dans lequel la portion de contact (101, 201) est prévue au niveau de l'extrémité proximale du logement d'actionneur.

12. Un système d'actionnement de soupape sous-marine (100, 200) tel que revendiqué dans la revendication 11, dans lequel la portion de contact (101, 201) est prévue au niveau de l'extrémité proximale du logement d'actionneur.

13. Un système d'actionnement de soupape sous-marine (100, 200) tel que revendiqué dans la revendication 12, dans lequel l'extrémité proximale (109, 209) du logement de réceptacle (107, 207) peut être raccordée à un corps de la soupape de telle sorte qu'un élément d'entraînement de la soupape est au moins en partie situé dans la chambre interne (115, 215) ; et l'extrémité distale (111, 211) est conçue pour recevoir au moins une partie d'un mécanisme d'entraînement (125, 225) de l'actionneur de telle sorte que le mécanisme d'entraînement (125, 225) et l'élément d'entraînement se mettent en prise à l'intérieur de la chambre interne (115, 215).

14. Un assemblage de soupape sous-marine comprenant au moins un système d'actionnement de soupape sous-marine conformément à la revendication 1.
